# EUROPEAN PATENT SPECIFICATION

(11) **EP 4 648 157 B1**
(45) Date of publication and mention of the grant of the patent: **14.10.2026**
(21) Application number: 25164943.0
(22) Date of filing: 20.03.2025
(51) Int. Cl.: H01M 10/0525, H01M 10/0567, H01M 10/0569

(54) **NON-AQUEOUS ELECTROLYTE AND LITHIUM SECONDARY BATTERY COMPRISING THE SAME**
NICHT-WÄSSRIGER ELEKTROLYT UND LITHIUM-SEKUNDÄRBATTERIE MIT DIESEM ELEKTROLYT
ÉLECTROLYTE NON AQUEUX ET BATTERIE SECONDAIRE AU LITHIUM LE CONTENANT

(30) Priority: 07.05.2024 KR 20240060184
(43) Date of publication of application: 12.11.2025
(73) Proprietor: LG Energy Solution, Ltd., Seoul 07335 (KR)
(72) Inventor: Park, Sung Guk, Daejeon 34122 (KR); Lee, Chul Haeng, Daejeon 34122 (KR); Lee, Jung Min, Daejeon 34122 (KR)
(74) Representative: Hoffmann Eitle

(56) References cited:
- WO-A1-2024/035170
- JP-A- 2004 139 888
- US-A1- 2024 063 438
- JIANG KYLE S. ET AL: "Probing the Functionality of LiFSI Structural Derivatives as Additives for Li Metal Anodes", ACS ENERGY LETTERS, vol. 7, no. 10, 13 September 2022 (2022-09-13), American Chemical Society, pages 3378 - 3385, XP093264939, ISSN: 2380-8195, Retrieved from the Internet <URL:https://pubs.acs.org/doi/pdf/10.1021/acsenergylett.2c01818> DOI: 10.1021/acsenergylett.2c01818
- WU HAO ET AL: "N,N-dimethyl fluorosulfonamide for suppressed aluminum corrosion in lithium bis(trifluoromethanesulfonyl)imide-based electrolytes", NANO RESEARCH, vol. 16, no. 6, 20 July 2022 (2022-07-20), CN, pages 8269 - 8280, XP093264921, ISSN: 1998-0124, Retrieved from the Internet <URL:https://link.springer.com/article/10.1007/s12274-022-4669-8> DOI: 10.1007/s12274-022-4669-8

## Description

### CROSS-REFERENCE TO RELATED APPLICATIONS

This application claims the priority of Korean Patent Application No. 10-2024-0060184 filed on May 7, 2024 in the Korean Intellectual Property Office.

### BACKGROUND OF THE INVENTION

### Field of the Invention

The present invention relates to a non-aqueous electrolyte and a lithium secondary battery including the same.

### Description of the Related Art

Recently, as the application fields of lithium secondary batteries have rapidly expanded to electricity, electronics, communications, and the supply of power to electronic apparatuses such as computers, as well as the power storage and supply for large-area apparatuses such as automobiles and power storage devices, high-capacity, high-output, and high-stability secondary batteries are increasingly demanded.

Particularly, with the emerging interests in solving environmental problems and realizing a sustainable, circular society, research on power storage devices such as lithium-ion battery furnaces and electric double-layer capacitors has been extensively conducted. Among them, a lithium secondary battery is in the spotlight as a battery system with the highest theoretical energy density among battery technologies.

The lithium ion battery is mainly composed of a positive electrode composed of a transition metal oxide containing lithium, a negative electrode capable of storing lithium, an electrolyte serving as a medium for transferring lithium ions, and a separator. Among the above, the electrolyte is known as a component which greatly affects the stability and safety of a battery, and thus, many studies have been conducted thereon.

In this regard, a non-aqueous electrolyte solution including a lithium salt, an organic solvent, and the like is generally used as an electrolyte of a lithium secondary battery, and a carbonate-based organic solvent or the like is used as the organic solvent. In this case, for example, LiPF₆ or the like may be used as the lithium salt, but a PF₆⁻ anion is very vulnerable to heat, so that when a battery is exposed to high temperatures, there is a problem in that Lewis acids such as HF and PF₅ are generated due to thermal decomposition of the lithium salt. The Lewis acids such as HF and PF₅ cause decomposition of the organic solvent itself, destroy a solid electrolyte interface (SEI) layer formed on the surface of a negative electrode active material, thereby generating gases such as CO₂ and CH₄, and cause problems of an increase in resistance, the degradation in lifespan, and a problem in storage performance of the lithium secondary battery.
K. S. Jiang et al.; ACS Energy Letters 2022 7 (10), 3378-3385, published "Probing the Functionality of LiFSI Structural Derivatives as Additives for Li Metal Anodes".

### SUMMARY OF THE INVENTION

An aspect of the present invention is to provide a non-aqueous electrolyte capable of minimizing gas generation which may occur during the driving of a secondary battery, thereby effectively protecting a negative electrode, and improving the lifespan, reducing the resistance, and improving the durability of a secondary battery.

Another aspect of the present invention is to provide a lithium secondary battery including the above-described non-aqueous electrolyte.

The present invention provides a non-aqueous electrolyte including a lithium salt, wherein the lithium salt is included at a molar concentration of 0.5 M to 5.0 M in the non-aqueous electrolyte, and an organic solvent, wherein the organic solvent includes ethylene carbonate and a compound represented by Formula 1 below, wherein the organic solvent comprises the ethylene carbonate in equal to or greater than 10 vol% to equal to or less than 50 vol%, and the compound represented by Formula 1 in equal to or greater than 5 vol% to equal to or less than 50 vol%, and characterized in that a volume ratio the compound represented by Formula 1 to the ethylene carbonate is 0.20 to 3.0.

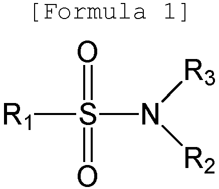

In Formula 1 above, R₁ is a fluorine atom, and R₂ and R₃ are each independently hydrogen, an alkyl group having 1 to 10 carbon atoms, or an aryl group having 6 to 20 carbon atoms, wherein the compound represented by Formula 1 above comprises a compound represented by Formula 1-A to be described later.

In addition, the present invention provides a lithium secondary battery including a negative electrode, a positive electrode opposing the negative electrode, a separator interposed between the negative electrode and the positive electrode, and the above-described non-aqueous electrolyte.

### ADVANTAGEOUS EFFECTS

A non-aqueous electrolyte of the present invention is characterized by including, as an organic solvent, ethylene carbonate and a sulfonamide-based compound having a specific structural formula in a specific volume ratio. Due to the combination of these organic solvent components, gas generation due to decomposition of the ethylene carbonate may be minimized, destruction of an SEI film on the surface of a negative electrode active material may be prevented, and oxidation stability, chemical stability, and electrochemical stability of the non-aqueous electrolyte may be improved.

Therefore, a lithium secondary battery to which the above-described non-aqueous electrolyte is applied is preferable in that gas generation may be prevented to a significant level, and at the same time, an increase in resistance may be prevented, lifespan performance may be improved, and durability may be excellent.

### DETAILED DESCRIPTION OF THE PREFERRED EMBODIMENT

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

In the present specification, it should be understood that the term "include," "comprise," or "have" is intended to specify the presence of stated features, numbers, steps, elements, or combinations thereof, but do not preclude the presence or addition of one or more other features, numbers, steps, elements, or combinations thereof.

In the present specification, it is understood that vol% refers to volume amount based on a total volume of a composition while wt% refers to weight or mass amount based on a total weight or mass of a composition.

In the present specification, it is understood that the range of A to B refers to including all the possible ranges available between the points of no less than A to no more than B.

Meanwhile, before describing the present invention, unless otherwise specified in the present invention, "*" refers to a connected portion (bonding site) between same or different atoms or end portions of formulas.

In addition, in the present specification, it will be understood that in the description of "a to b carbon atoms" herein, "a" and "b" each refer to the number of carbon atoms included in a specific functional group. That is, the functional group may include "a" to "b" number of carbon atoms. For example, an "alkyl group having 1 to 5 carbon atoms" refers to a C1-C5 alkyl group having 1 to 5 carbon atoms, that is, CH₃-, CH₃CH₂-, CH₃CH₂CH₂-, (CH₃)₂CH-, CH₃CH₂CH₂CH₂-, (CH₃)₂CHCH₂-, CH₃CH₂CH₂CH₂CH₂-, (CH₃)₂CHCH₂CH₂-, and the like.

In the present specification, the term "alkyl" refers to a radical of a saturated aliphatic group, including a straight-chain alkyl group and a branched-chain alkyl group. The terms "alkenyl" and "alkynyl" refer to an unsaturated aliphatic group analogous to the alkyl group but containing at least one double or triple bond, respectively. The term "aryl" refers to an aromatic hydrocarbon radical having a single ring (e.g., phenyl), multiple rings (e.g., biphenyl), or multiple fused rings in which at least one is aromatic (e.g., naphthyl, 1, 2, 3, 4-tetrahydronaphthyl). The terms "alkoxy" and "aryloxy" refers to an alkyl group and an aryl group having one oxygen. The term "heteroaryl" refers to an aryl group containing a heteroatom including, but not limited to, N, O and S.

In addition, in the present specification, an alkyl group or an aryl group may be either substituted or unsubstituted. Unless otherwise defined, the term "substituted" means that at least one hydrogen bonded to carbon is substituted with an element other than hydrogen, and for example, it means being substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a heterocycloalkyl group having 3 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, a haloaryl group having 6 to 20 carbon atoms, or the like.

Hereinafter, the present invention will be described in more detail.

### Non-aqueous electrolyte

The present invention relates to a non-aqueous electrolyte.

Specifically, the non-aqueous electrolyte according to the present invention is characterized by including a lithium salt and an organic solvent, wherein the organic solvent includes ethylene carbonate and a compound represented by Formula 1 below, wherein a volume ratio of the compound represented by Formula 1 to the ethylene carbonate is 0.20 to 3.0.

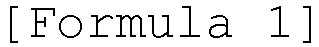

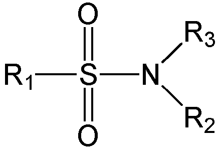

In Formula 1 above, R₁ is a fluorine atom, and R₂ and R₃ are each independently hydrogen, an alkyl group having 1 to 10 carbon atoms, or an aryl group having 6 to 20 carbon atoms.

A non-aqueous electrolyte of the present invention is characterized by including, as an organic solvent, ethylene carbonate and a sulfonamide-based compound having a specific structural formula in a specific volume ratio. Due to the combination of these organic solvent components, gas generation due to decomposition of the ethylene carbonate may be minimized, destruction of an SEI film on the surface of a negative electrode active material may be prevented, and oxidation stability, chemical stability, and electrochemical stability of the non-aqueous electrolyte may be improved. Therefore, a lithium secondary battery to which the above-described non-aqueous electrolyte is applied is preferable in that gas generation may be prevented to a significant level, and at the same time, an increase in resistance may be prevented, lifespan performance may be improved, and durability may be excellent.

### (1) Lithium salt

As the lithium salt used in the present invention, various lithium salts commonly used in a non-aqueous electrolyte for a lithium secondary battery may be used without limitation. For example, the lithium salt may include Li⁺ as a cation, and may include, as an anion, at least one selected from the group consisting of F⁻, Cl⁻, Br⁻, I⁻, NO₃⁻, N(CN)₂⁻, BF₄⁻, ClO₄⁻, AlO₂⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻.

Specifically, the lithium salt may include at least one selected from the group consisting of LiCl, LiBr, LiI, LiBF₄, LiClO₄, LiAlO₂, LiAlO₄, LiAlCl₄, LiPF₆, LiSbF₆, LiAsF₆, LiB₁₀Cl₁₀, LiB (C₂O₄)₂ (LiBOB), LiCF₃SO₃, LiN(SO₂F)₂ (LiFSI), LiCH₃SO₃, LiCF₃CO₂, LiCH₃CO₂, and LiN(SO₂CF₂CF₃ )₂ (LiBETI). Specifically, the lithium salt may include at least one selected from the group consisting of LiBF₄, LiClO₄, LiPF₆, LiB(C₂O₄)₂ (LiBOB), LiCF₃SO₃, LiN(SO₂CF₃)₂ (LiTFSI), LiN(SO₂F)₂ (LiFSI), and LiN(SO₂CF₂CF₃)₂ (LiBETI). More specifically, the lithium salt may include LiPF₆, and in this case, an effect in accordance with the use of ethylene carbonate and the compound represented by Formula 1 together may be manifested to a desirable level.

In the non-aqueous electrolyte, the lithium salt is included at a concentration of 0.5 M to 5 M, and may specifically be included at a concentration of 0.8 M to 4 M, and more specifically 0.8 M to 2.0 M. When the concentration of the lithium salt satisfies the above range, the Li⁺ transference number and the degree of dissociation of lithium ions are improved, so that output properties of the battery may be improved.

### (2) Organic solvent

The organic solvent includes ethylene carbonate and a compound represented by Formula 1 below.

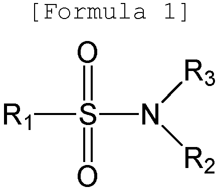

In Formula 1 above, R₁ may be a fluorine atom, and R₂ and R₃ may each independently be hydrogen, an alkyl group having 1 to 10 carbon atoms, or an aryl group having 6 to 20 carbon atoms.

The non-aqueous electrolyte of the present invention is characterized by including, as an organic solvent, ethylene carbonate and a sulfonamide-based compound by Formula 1 in a volume ratio to be described later. Due to the combination of these organic solvent components, gas generation due to decomposition of the ethylene carbonate may be minimized, destruction of an SEI film on the surface of a negative electrode active material may be prevented, and oxidation stability, chemical stability, and electrochemical stability of the non-aqueous electrolyte may be improved. Therefore, a lithium secondary battery to which the above-described non-aqueous electrolyte is applied is preferable in that an increase in resistance may be prevented, lifespan performance may be improved, and durability may be excellent.

The volume ratio of the compound represented by Formula 1 to the ethylene carbonate is 0.20 to 3.0.

If the volume ratio of the compound represented by Formula 1 to the ethylene carbonate is less than 0.20, it is not desirable in that not only does the viscosity of the organic solvent become excessively high, but also does the gas generation due to decomposition of the ethylene carbonate intensify. In addition, if the volume ratio of the compound represented by Formula 1 to the ethylene carbonate is greater than 3.0, there is a problem in that the degree of dissociation of the lithium salt is degraded, thereby rapidly degrading ion conductivity.

Specifically, the volume ratio of the compound represented by Formula 1 to the ethylene carbonate is 0.20 or greater, and may be 0.23 or greater, 0.25 or greater, 0.3 or greater, 0.4 or greater, 0.5 or greater, 0.6 or greater, 0.7 or greater, 0.8 or greater, 0.9 or greater, 1.0 or greater, 1.1 or greater, 1.2 or greater, or 1.3 or greater. The volume ratio of the compound represented by Formula 1 to the ethylene carbonate is 3.0 or less, and may be 2.8 or less, 2.5 or less, 2.4 or less, 2.3 or less, 2.2 or less, 2.1 or less, 2.0 or less, 1.9 or less, 1.8 or less, 1.7 or less, 1.6 or less, 1.5 or less, 1.4 or less, 1.3 or less, 1.2 or less, 1.1 or less, 1.0 or less, or 0.8 or less. The above-described numerical ranges may be combined with each other without limitation. When in the above-described range, the viscosity of the organic solvent may be appropriately secured, and the ion conductivity of the lithium salt may be improved, and also, due to the combination of these organic solvent components, gas generation due to decomposition of the ethylene carbonate may be minimized, destruction of an SEI film on the surface of a negative electrode active material may be prevented, and oxidation stability, chemical stability, and electrochemical stability of the non-aqueous electrolyte may be improved.

When a lithium secondary battery is subjected to an activation (formation) process under the condition described below in examples, the amount of gas formed in the electrolyte containing the compound represented by Formula 1 and ethylene carbonate in the above-described specific volume ratio may be reduced by greater than or equal to 10%, greater than or equal to 20%, greater than or equal to 30%, greater than or equal to 40%, greater than or equal to 50%, greater than or equal to 60%, or greater than or equal to 65%, relative to that containing the compound represented by Formula 1 and ethylene carbonate outside the above-described specific volume ratio while all other factors being equal.

The ethylene carbonate is a kind of a cyclic carbonate-based organic solvent, and is preferably used in terms of improving dissociation and mobility of a lithium salt. In addition, the ethylene carbonate may be prevented from being decomposed due to the compound represented by Formula 1 above, so that movement properties of lithium may be further improved. Meanwhile, the ethylene carbonate is also preferable in that the ethylene carbonate does not inhibit an effect of preventing the generation of CH₄ and CO₂ gases in accordance with the application of the compound represented by Formula 1 above.

If a cyclic carbonate other than ethylene carbonate, specifically a fluorine-substituted ethylene carbonate (fluoroethylene carbonate, or the like), is applied, the cyclic carbonate has higher reducibility than CO₂, thereby inhibiting the reduction of CO₂, which is not desirable. In this regard, it may be preferable that a fluorine-substituted ethylene carbonate such as fluoroethylene carbonate is not included in the non-aqueous electrolyte, or is added in at least a small amount(e.g., less than 5 wt% of non-aqueous electrolyte) .

The organic solvent includes the ethylene carbonate in an amount of 10 vol% or greater, and may include the ethylene carbonate in an amount of 12 vol% or greater, 15 vol% or greater, 18 vol% or greater, 20 vol% or greater, 22 vol% or greater, or 24 vol% or greater. The organic solvent includes the ethylene carbonate in an amount of 50 vol% or less, and may include the ethylene carbonate in an amount of 48 vol% or less, 45 vol% or less, 42 vol% or less, 40 vol% or less, 38 vol% or less, 35 vol% or less, or 30 vol% or less. The above-described numerical ranges may be combined with each other without limitation. When in the above-described range, the viscosity of the organic solvent may be appropriately adjusted, and the dissociation, movement, and transfer of the lithium salt may be facilitated.

The compound represented by Formula 1 above has excellent electrochemical stability and chemical stability without generating gases such as CO₂ and CH₄ due to structural properties of the compound, and if used in the above-described content or content ratio, does not degrade the degree of dissociation of the lithium salt. Particularly, if the compound represented by Formula 1 above satisfies the above-described specific volume ratio with respect to ethylene carbonate, it is desirable in that an effect of reducing gas generation to a significant level, and an effect of improving resistance performance and lifespan performance may be achieved.

The compound represented by Formula 1 has a structure in which fluorine and N(R₂)(R₃) are bonded using a sulfone group (-SO₂-) as a linker, and particularly, the sulfone group is different from a carbonate functional group, which is the cause of gas generation, and thus, is particularly preferable in terms of the effect of reducing gas generation.

In addition, the compound represented by Formula 1 has its own structural stability, while having properties of having a lower affinity for a lithium cation of the lithium salt, but having an affinity for a corresponding anion. This promotes the formation of a solventized structure of the lithium cation and ethylene carbonate, so that oxidation stability may be further improved.

Meanwhile, the compound represented by Formula 1 has high structural stability, thereby having a minimized decomposition reaction during initial activation or battery driving, but the compound may be decomposed in a minimal amount during an initial activation process, thereby forming an SEI film. In this case, the SEI film derived from the compound represented by Formula 1 includes a Li₂SO₄-based compound, and thus, has excellent durability, and may also prevent rapid decomposition of an additive during the initial activation, thereby preventing an increase in resistance of a negative electrode film.

In addition, in the compound represented by Formula 1 above, R₁ is a fluorine (F) atom. The fluorine atoms may be bonded to a sulfone group to improve oxidation stability of the organic solvent to a significant level. A fluorine-substituted alkyl group such as -CF₃, which is not the fluorine atom, is not preferable in terms of increasing the viscosity of the organic solvent due to a size problem of a substituent, and adversely affecting resistance. Specifically, when the compound represented by Formula 1, where a fluorine (F) atom is bonded to the sulfone group, is used along with the ethylene carbonate as the organic solvent in the electrolyte, the resultant electrolyte is preferable as a proper viscosity and ion conductivity of an electrolyte can be secured while further reducing gas generation. When such electrolyte is applied to a lithium battery, a reduced resistance and a better life span performance may be achieved.

In addition, R₂ and R₃ may each independently be hydrogen, an alkyl group having 1 to 10 carbon atoms, or an aryl group having 6 to 20 carbon atoms. Specifically, R₂ and R₃ may each independently be an alkyl group having 1 to 10 carbon atoms, more specifically, may each independently be an alkyl group having 1 to 5 carbon atoms, and even more specifically, may each independently be an alkyl group having 1 to 3 carbon atoms, in which case a stable bonding length with the sulfone group may be implemented, so that the structural stability of the compound represented by Formula 1 above may be further improved. Still more specifically, R₂ and R₃ may each independently be selected from a methyl group, an ethyl group, and a propyl group, and may each independently be a methyl group or an ethyl group, and more specifically, may each be a methyl group.

The compound represented by Formula 1 above includes a compound represented by Formula 1-A below.

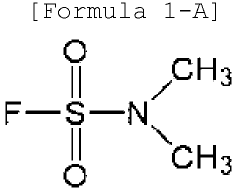

The organic solvent includes the compound represented by Formula 1 above in an amount of 5 vol% or greater, and may include the compound represented by Formula 1 above in an amount of 7 vol% or greater, 8 vol% or greater, 10 vol% or greater, 12 vol% or greater, 15 vol% or greater, 18 vol% or greater, 20 vol% or greater, 30 vol% or greater, or 35 vol% or greater. The organic solvent includes the compound represented by Formula 1 above in an amount of 50 vol% or less, and may include the compound represented by Formula 1 above in an amount of 45 vol% or less, 42 vol% or less, or 40 vol% or less. The above-described numerical ranges may be combined with each other without limitation. That is, the organic solvent includes the compound represented by Formula 1 above in an amount of 5 to 50 vol%. In a preferred embodiment, the organic solvent may include the compound represented by Formula 1 in an amount of 5 to 30 vol%. When in the above-described range, the effect of preventing gas generation due to the decomposition of the organic solvent may be maximized without degrading the degree of dissociation of the lithium salt.

The compound represented by Formula 1 has excellent electrochemical stability chemical stability, and if used in the above-described content or content ratio, does not degrade the degree of dissociation of the lithium salt. Particularly, if the compound represented by Formula 1 satisfies the above-described specific volume ratio with respect to ethylene carbonate, it is desirable in that an effect of reducing gas generation to a significant level, and an effect of improving resistance performance and lifespan performance may be achieved.

The organic solvent may further include a linear carbonate-based organic solvent.

In addition, the linear carbonate-based organic solvent is an organic solvent having low viscosity and a low dielectric constant, and specifically, the linear carbonate-based organic solvent may include at least one selected from the group consisting of dimethyl carbonate (DMC), diethyl carbonate (DEC), dipropyl carbonate (DPC), ethyl methyl carbonate (EMC), methylpropyl carbonate (MPC), and ethylpropyl carbonate (EPC), and more specifically, may include at least one selected from the group consisting of ethyl methyl carbonate (EMC), dimethyl carbonate (DMC), and diethyl carbonate (DEC), in terms of further improving the oxidation stability of the organic solvent.

If the organic solvent further includes the linear carbonate-based organic solvent, the organic solvent may include the linear carbonate-based organic solvent in an amount of 20 vol% or greater, 22 vol% or greater, 25 vol% or greater, 28 vol% or greater, 30 vol% or greater, 35 vol% or greater, 40 vol% or greater, 45 vol% or greater, or 48 vol% or greater. If the organic solvent further includes the linear carbonate-based organic solvent, the organic solvent may include the linear carbonate-based organic solvent in an amount of 85 vol% or less, 70 vol% or less, 65 vol% or less, 60 vol% or less, 58 vol% or less, 57 vol% or less, 55 vol% or less, or 52 vol% or less. The above-described numerical ranges may be combined with each other without limitation. When in the above-described range, it is possible to implement a non-aqueous electrolyte having excellent oxidation stability while appropriately adjusting the viscosity of the organic solvent. The linear carbonate-based organic solvent may be included, for example, in an amount excluding the volume of the ethylene carbonate and the compound represented by Formula 1 above in the organic solvent.

If the organic solvent further includes the linear carbonate-based organic solvent, the volume ratio of the compound represented by Formula 1 to the linear carbonate-based organic solvent may be 0.05 or greater, 0.06 or greater, 0.08 or greater, 0.1 or greater, 0.15 or greater, 0.2 or greater, 0.25 or greater, 0.27 or greater, 0.3 or greater, 0.35 or greater, 0.4 or greater, 0.5 or greater, 0.6 or greater, 0.7 or greater, 0.8 or greater, 0.9 or greater, 1.0 or greater, 1.1 or greater, or 1.2 or greater. The ratio of the volume of the compound represented by Formula 1 above to the volume of the linear carbonate-based organic solvent may be 2.5 or less, 2.0 or less, 1.8 or less, 1.7 or less, 1.5 or less, 1.4 or less, 1.3 or less, 1.2 or less, 1.0 or less, 0.8 or less, 0.6 or less, or 0.5 or less. The above-described numerical ranges may be combined with each other without limitation. In a preferred embodiment, the volume ratio of the compound represented by Formula 1 to the linear carbonate-based organic solvent is 0.05 to 2, preferably 0.05 to 1.5. When in the above-described range, it is possible to implement a non-aqueous electrolyte having excellent oxidation stability while appropriately adjusting the viscosity of the organic solvent.

If the organic solvent further includes the linear carbonate-based organic solvent, the ratio of the total volume of the ethylene carbonate and the compound represented by Formula 1 to the volume of the linear carbonate-based organic solvent may be 0.3 or greater, 0.35 or greater, 0.5 or greater, 0.6 or greater, 0.7 or greater, 0.8 or greater, 0.9 or greater, 0.95 or greater, or 1.0 or greater. The ratio of the total volume of the ethylene carbonate and the compound represented by Formula 1 to the volume of the linear carbonate-based organic solvent may be 2.5 or less, 2.4 or less, 2.3 or less, 1.7 or less, 1.6 or less, 1.5 or less, 1.4 or less, 1.3 or less, 1.25 or less, or 1.2 or less. In a preferred embodiment, the ratio of the total volume of the ethylene carbonate and the compound represented by Formula 1 above to the volume of the linear carbonate-based organic solvent is 0.3 to 2.5, preferably 0.6 to 2.5. When in the above-described range, it is possible to implement a non-aqueous electrolyte having excellent oxidation stability while appropriately adjusting the viscosity of the organic solvent.

The organic solvent may further include a cyclic carbonate-based organic solvent excluding ethylene carbonate. The cyclic carbonate-based organic solvent excluding ethylene carbonate may include at least one selected from the group consisting of propylene carbonate, 1,2-butylene carbonate, 2,3-butylene carbonate, 1,2-pentylene carbonate, 2,3-pentylene carbonate, and vinylene carbonate.

Meanwhile, if necessary, the organic solvent may additionally use any organic solvent commonly used in a non-aqueous electrolyte without limitation. For example, the organic solvent may additionally include at least one organic solvent among a linear ester-based organic solvent, a cyclic ester-based organic solvent, an ether-based organic solvent, a glyme-based solvent, and a nitrile-based organic solvent.

The linear ester-based organic solvent may specifically include at least one selected from the group consisting of methyl acetate, ethyl acetate, propyl acetate, methyl propionate, ethyl propionate, propyl propionate, and butyl propionate.

In addition, the cyclic ester-based organic solvent may include at least one selected from the group consisting of γ-butyrolactone, γ-valerolactone, γ-caprolactone, σ-valerolactone, and ε-caprolactone.

As the ether-based solvent, any one selected from the group consisting of dimethyl ether, diethyl ether, dipropyl ether, methyl ethyl ether, methyl propyl ether, ethyl propyl ether, 1,3-dioxolane (DOL), and 2,2-bis (trifluoromethyl)-1,3-dioxolane (TFDOL), or a mixture of two or more thereof may be used, but the present invention is not limited thereto.

The glyme-based solvent is a solvent having a higher dielectric constant and lower surface tension than those of a linear carbonate-based organic solvent, and having less reactivity with a metal, and may include at least one selected from the group consisting of dimethoxyethane (glyme, DME), diethoxyethane, digylme, tri-glyme, and tetra-glyme (TEGDME), but is not limited thereto.

The nitrile-based solvent may be one or more selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

### (3) Additive

The non-aqueous electrolyte may further include an additive together with the lithium salt and the organic solvent described above.

The additional additive may be included in the non-aqueous electrolyte to prevent the non-aqueous electrolyte from decomposing in a high-output environment to cause collapse of a negative electrode, or to achieve low-temperature high-rate discharge properties, high-temperature stability, overcharge prevention, battery expansion suppression at high temperatures, and the like.

Specifically, the additive may include at least one selected from the group consisting of lithium difluorophosphate (LiDFP), vinylene carbonate, vinyl ethylene carbonate, fluoroethylene carbonate, propane sultone, propene sultone, succinonitrile, adiponitrile, ethylene sulfate, lithium bis-(oxalato)borate (LiBOB), tris (trimethylsilyl) phosphate), lithium tetrafluoroborate (LiBF₄), lithium difluoro(oxalato)borate (LiDFOB), lithium difluoro bis(oxalato) phosphate (LiDFOP), tris(trimethylsilyl)phosphate (TMSPa), tris(trimethylsilyl)phosphite (TMSPi), and a compound represented by Formula 2 below.

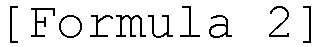

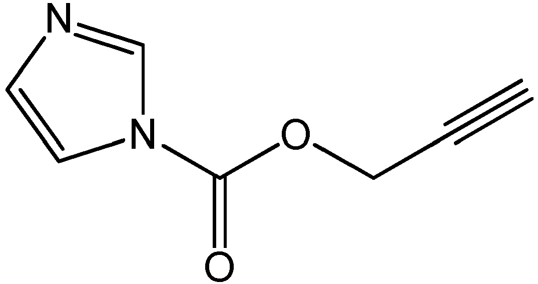

The additive may be included in an amount of 0.1 wt% to 15 wt%, more specifically 0.3 wt% to 10 wt%, in the non-aqueous electrolyte.

The viscosity of the above non-aqueous electrolyte at 25°C may be 2 cP or more, 2.2 cP or more, 2.4 cP or more, 2.6 cP or more, 2.8 cP or more, 3 cP or more, 3.1 cP or more, 3.2 cP or more, 3.4 cP or more, or 3.5 cP or more. The viscosity of the above non-aqueous electrolyte at 25°C may be 6 cP or less, 5 cP or less, 4.5 cP or less, 4.2 cP or less, or 4 cP or less. The above numerical ranges may be combined without limitation. The above viscosity may be measured using a viscosity meter (BrookField, Model: DV-3 ULTRA), and for example, the viscosity may be measured under the conditions of 25°C and 250 rpm.

### Lithium secondary battery

In addition, the present invention provides a lithium secondary battery including the above-described non-aqueous electrolyte.

Specifically, the lithium secondary battery according to the present invention includes a negative electrode, a positive electrode opposing the negative electrode, a separator interposed between the negative electrode and the positive electrode, and the above-described non-aqueous electrolyte.

The lithium secondary battery may be manufactured by accommodating an electrode assembly, which includes the negative electrode, the positive electrode opposing the negative electrode, and the separator interposed between the negative electrode and the positive electrode, in a battery case, and then injecting the above-described non-aqueous electrolyte into the battery case.

Since the non-aqueous electrolyte has been described above, hereinafter, the negative electrode, the positive electrode, and the separator will be described.

### (1) Negative electrode

The negative electrode may include a negative electrode active material.

The negative electrode active material is a material capable of reversibly intercalating/de-intercalating lithium ions, and may include at least one selected from the group consisting of a carbon-based active material, a (semi-)metal-based active material, and a lithium metal, and specifically, may include at least one selected from a carbon-based active material and a (semi-)metal-based active material. In this case, in the present specification, the (semi-)metal-based active material may be an expression including a semi-metal-based active material and metal-based active material. In this case, compared to a case in which a lithium metal negative electrode is used, an effect in accordance with the use of ethylene carbonate and the compound represented by Formula 1 together may be manifested to a significant level.

The carbon-based active material may include at least one selected from the group consisting of artificial graphite, natural graphite, hard carbon, soft carbon, carbon black, graphene, and fibrous carbon, and may preferably include at least one selected from the group consisting of artificial graphite and natural graphite.

The average particle diameter (D₅₀) of the carbon-based active material may be 10 µm to 30 µm, preferably 15 µm to 25 µm, in terms of ensuring structural stability during charge/discharge and decreasing side reactions with an electrolyte solution.

Specifically, the (semi-)metal-based active material may include at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn, an alloy of lithium and at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn, an oxide of at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn, lithium titanium oxide (LTO), lithium vanadium oxide, and the like.

More specifically, the (semi-)metal-based active material may include a silicon-based active material.

The silicon-based active material may include at least one selected from the group consisting of silicon (Si), silicon oxide (which may be represented by SiOₓ (0<x<2), and preferably SiO), and silicon-carbon composite (Si/C composite) .

The average particle diameter (D₅₀) of the silicon-based active material may be 1 µm to 30 µm, and preferably 2 µm to 15 µm, in terms of ensuring structural stability during charge/discharge and decreasing side reactions with an electrolyte solution.

Specifically, the negative electrode active material may include at least one of a carbon-based active material and a silicon-based active material, and specifically, may include a carbon-based active material and a silicon-based active material. If the negative electrode active material includes a carbon-based active material and a silicon-based active material, the weight ratio of the carbon-based active material and the silicon-based active material may be 50:50 to 99:1, specifically 70:30 to 99:1, more specifically 85:15 to 99:1, and even more specifically 90:10 to 99:1.

The negative electrode may include a negative electrode current collector, and a negative electrode active material layer disposed on at least one surface of the negative electrode current collector. In this case, the negative electrode active material may be included in the negative electrode active material layer.

The negative electrode current collector is not particularly limited as long as it has conductivity without causing a chemical change in the battery. Specifically, as the negative electrode current collector, copper, stainless steel, aluminum, nickel, titanium, fired carbon, copper or stainless steel that is surface-treated with one of carbon, nickel, titanium, silver, and the like, an aluminum-cadmium alloy, and the like may be used.

The negative electrode current collector may typically have a thickness of 3 µm to 500 um.

The negative electrode current collector may have microscopic irregularities formed on the surface thereof to improve the bonding force of the negative electrode active material. For example, the negative electrode current collector may be used in various forms such as a film, a sheet, a foil, a net, a porous body, a foam, and a non-woven body.

The negative electrode active material layer may be disposed on at least one surface of the negative electrode current collector, and specifically, may be disposed on one surface or both surfaces of the negative electrode current collector.

The negative electrode active material may be included in an amount of 60 wt% to 99 wt%, preferably 75 wt to 95 wt%, in the negative electrode active material layer.

Since the negative electrode active material has been described above, a description other than the above description will be omitted.

The negative electrode active material layer may further include a binder and/or a conductive material together with the negative electrode active material.

The binder is used to improve battery performance by improving adhesion between the negative electrode active material layer and the negative electrode current collector, and may include, for example, at least any one selected from the group consisting of polyvinylidenefluoride-hexafluoropropylene copolymer (PVDF-co-HFP), polyvinylidenefluoride (PVDF), polyacrylonitrile, polymethylmethacrylate, polyvinylalcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluorine rubber, and a material having a hydrogen thereof substituted with Li, Na, Ca, or the like, and may also include various copolymers thereof.

The binder may be included in an amount of 0.5 wt% to 10 wt%, preferably 1 wt% to 5 wt%, in the negative electrode active material layer.

The conductive material is not particularly limited as long as having conductivity without causing a chemical change in the battery, and for example, graphite such as natural graphite or artificial graphite; a carbon-based material such as carbon black, acetylene black, Ketjen black, channel black, furnace black, lamp black, and thermal black; conductive fiber such as carbon fiber and metal fiber; a conductive tube such as a carbon nanotube; metal powder such as fluorocarbon powder, aluminum powder, and nickel powder; a conductive whisker such as zinc oxide and potassium titanate; a conductive metal oxide such as titanium oxide; a conductive material such as a polyphenylene derivative, and the like may be used.

The conductive material may be included in an amount of 0.5 wt% to 10 wt%, preferably 1 wt% to 5 wt%, in the negative electrode active material layer.

The thickness of the negative electrode active material layer may be 10 µm to 200 µm, preferably 20 µm to 150 µm.

The negative electrode may be manufactured by coating at least one surface of a negative electrode current collector with a negative electrode slurry including a negative electrode active material, a binder, a conductive material, and/or a solvent for forming a negative electrode slurry, and then drying and rolling the resultant.

The solvent for forming a negative electrode slurry may include, for example, at least one selected from the group consisting of distilled water, N-methyl-2-pyrrolidone (NMP), ethanol, methanol, and isopropyl alcohol, preferably distilled water, in terms of facilitating the dispersion of the negative electrode active material, the binder, and/or the conductive material. The solid content of the negative electrode slurry may be 30 wt% to 80 wt%, specifically 40 wt% to 70 wt%.

### (2) Positive electrode

The positive electrode may oppose the negative electrode.

The positive electrode may include a positive electrode active material.

The positive electrode active material is a compound capable of reversible intercalation and deintercalation, and is not particularly limited as long as it is a positive electrode active material used in the art. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium iron phosphate such as LiFePO₄; a lithium manganese oxide of the formula Li_{1+c1}Mn_{2-c1}O₄ (0≤c1≤0.33), and LiMnO₃, LiMn₂O₃, and LiMnO₂; lithium copper oxide (Li₂CuO₂); a vanadium oxide such as LiV₃O₈, V₂O₅, and Cu₂V₂O₇; a Ni-site type lithium nickel oxide represented by the formula LiNi_{1-c2}M_{c2}O₂ (wherein M is at least one selected from the group consisting of Co, Mn, Al, Cu, Fe, Mg, B, and Ga, and 0.01≤c2≤0.3); a lithium manganese composite oxide represented by the formula LiMn_{2-c3}M_{c3}O₂ (wherein M is at least one selected from the group consisting of Co, Ni, Fe, Cr, Zn, and Ta, and 00.01≤c3≤0.1) or the formula Li₂Mn₃MO₈ (wherein M is at least one selected from the group consisting of Fe, Co, Ni, Cu, and Zn); or the like, but is not limited thereto.

More specifically, the positive electrode active material may include at least one selected from the group consisting of lithium cobalt oxide (LiCoO₂), lithium nickel cobalt manganese oxide containing high-nickel, hyper-lithium manganese-rich oxide, and lithium iron phosphate.

The lithium nickel cobalt manganese oxide containing high-nickel may be represented by Formula A below.

[Formula A] Li₁₊ₓ(NiₐCo_{b}Mn_{c}M_{d})O₂

In Formula A above, M is one or more selected from W, Cu, Fe, V, Cr, Ti, Zr, Zn, Al, In, Ta, Y, La, Sr, Ga, Sc, Gd, Sm, Ca, Ce, Nb, Mg, B, and Mo, and 1+x, a, b, c, and d are each an atomic fraction of an independent element, wherein 0≤x≤0.2, 0.50≤a<1, 0<b≤0.25, 0<c≤0.25, 0≤d≤0.1, and a+b+c+d=1. Preferably, the a, b, c, and d may respectively be 0.70≤a≤0.95, 0.025≤b≤0.20, 0.025≤c≤0.20, and 0≤d≤0.05. In addition, the a, b, c, and d may respectively be 0.80≤a≤0.95, 0.025≤b≤0.15, 0.025≤c≤0.15, and 0≤d≤0.05. In addition, the a, b, c, and d may respectively be 0.85≤a≤0.90, 0.05≤b≤0.10, 0.05≤c≤0.10, and 0≤d≤0.03.

The hyper-lithium manganese-rich oxide may include a compound represented Formula B below.

[Formula B] Li₁₊ₛ[NiₜCoᵤMnᵥM¹_{w}]O_{2+z}

In Formula B above, M¹ is one or more selected from W, Cu, Fe, V, Cr, Ti, Zr, Zn, Al, In, Ta, Y, La, Sr, Ga, Sc, Gd, Sm, Ca, Ce, Nb, Mg, B, and Mo, and 0.05≤s≤1, 0≤t≤0.5, 0≤u≤0.3, 0.5≤v<1.0, 0≤w≤0.2, and 0≤z≤1. Preferably, in Formula B above, it may be that 0.05≤s≤1.0, 0.1≤t≤0.5, 0≤u≤0.1, 0.5≤v<1.0, 0≤w≤0.2, and 0≤z≤1. More preferably, in Formula B above, it may be that 0.10≤s≤0.50, 0.1≤t≤0.5, 0≤u≤0.1, 0.6≤v<1.0, 0≤w≤0.1, and 0≤z≤0.50.

The lithium iron phosphate may include a compound represented by Formula C below.

[Formula C] Li₁₊ₑFe_{1-g}M²_{g}(PO_{4-f})X_{f}

In Formula C above, M² is one or more elements selected from Co, Ni, Mn, Al, Mg, Ti, and V, X is F, S, or N, and 0≤g≤0.5, -0.5≤e≤+0.5, and 0≤f≤0.1. Formula C above may be specifically represented by LiFePO₄ (a=0, s=0, and b=0).

The positive electrode may include a positive electrode current collector, and a positive electrode active material layer disposed on at least one surface of the positive electrode current collector.

The positive electrode current collector is not particularly limited as long as it has high conductivity without causing a chemical change in the battery. Specifically, the positive electrode current collector may include at least one selected from the group consisting of copper, stainless steel, aluminum, nickel, titanium, fired carbon, and an aluminum-cadmium alloy, and preferably, may include aluminum.

The positive electrode current collector may typically have a thickness of 3 µm to 500 µm.

The positive electrode current collector may have microscopic irregularities formed on the surface thereof to improve the bonding force of the positive electrode active material. For example, the positive electrode current collector may be used in various forms such as a film, a sheet, a foil, a net, a porous body, a foam, and a non-woven body.

The positive electrode active material layer may be disposed on one at least one surface of the positive electrode current collector. Specifically, the positive electrode active material layer may be disposed on one surface or both surfaces of the positive electrode current collector.

The positive electrode active material layer may include the above-described positive electrode active material.

The positive electrode active material may be included in an amount of 80 wt% to 99 wt%, specifically 85 wt to 98 wt%, in the positive electrode active material layer.

The positive electrode active material layer may selectively further include a binder and/or a conductive material together with the above-described positive electrode active material.

The binder is a component for assisting in binding of an active material, a conductive material, and the like, and binding to a current collector. Specifically, the binder may include at least one selected from the group consisting of a polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber, and fluorine rubber, and include preferably polyvinylidene fluoride.

The binder may be included in the positive electrode active material layer in an amount of 1 wt% to 20 wt%, preferably 1.2 wt% to 10 wt%, in terms of securing sufficient binding force between components such as a positive electrode active material.

The conductive material may be used to assist and improve conductivity in the secondary battery, and is not particularly limited as long as having conductivity without causing a chemical change. Specifically, the positive electrode conductive material may include graphite such as natural graphite or artificial graphite; a carbon-based material such as carbon black, acetylene black, Ketjen black, channel black, furnace black, lamp black, and thermal black; conductive fiber such as carbon fiber and metal fiber; a conductive tube such as a carbon nanotube; fluorocarbon; metal powder such as aluminum powder and nickel powder; a conductive whisker such as zinc oxide and potassium titanate; a conductive metal oxide such as titanium oxide; and a polyphenylene derivative, and preferably, may include a carbon nanotube in terms of improving conductivity.

In terms of securing sufficient electrical conductivity, the conductive material may be included in an amount of 1 wt% to 20 wt%, preferably 1.2 wt% to 10 wt%, in the positive electrode active material layer.

The thickness of the positive electrode active material layer may be 5 µm to 500 µm, preferably 20 µm to 200 µm.

The positive electrode may be manufactured by coating the positive electrode current collector with a positive electrode slurry including a positive electrode active material, and selectively, a binder, a conductive material, and a solvent for forming a positive electrode slurry, followed by drying and roll-pressing the positive electrode slurry.

### (3) Separator

The separator may be interposed between the positive electrode and negative electrode.

As the separator, a common porous polymer film typically used as a separator, for example, a porous polymer film made of a polyolefin-based polymer, such as an ethylene homocopolymer, a propylene homocopolymer, an ethylene/butene copolymer, an ethylene/hexene copolymer, and an ethylene/methacrylate copolymer may be used alone, or a laminate thereof may be used. Alternatively, a common porous non-woven fabric, for example, a non-woven fabric made of glass fiber having a high melting point or polyethylene terephthalate fiber may be used, but the separator is not limited thereto. Also, a coated separator including a ceramic component or a polymer material may be used to secure heat resistance or mechanical strength, and may be selectively used in a single-layered or a multi-layered structure.

The external shape of the lithium secondary battery of the present invention is not particularly limited, but may be a cylindrical shape using a can, a square shape, a pouch shape, a coin shape, or the like.

Hereinafter, the present invention will be described in more detail with reference to specific examples. However, the following examples are for illustrative purposes only to facilitate the understanding of the present invention, and do not limit the scope of the present invention. It will be apparent to those skilled in the art that various changes and modifications can be made within the scope of the appended claims.

Unless otherwise indicated, the volume of each of the constituents of the organic solvent described herein is individually determined at 25 °C.

### Examples and Comparative Examples

### Example 1

### (Preparation of non-aqueous electrolyte for lithium secondary battery)

In an organic solvent in which ethylene carbonate (EC), ethyl methyl carbonate (EMC), and a compound represented by Formula 1-A were mixed in a volume ratio of 30:50:20, LiPF₆ was dissolved to 1.0 M, and then vinylene carbonate (VC) was added thereto in an amount of 0.8 wt% to prepare a non-aqueous electrolyte for a lithium secondary battery (see Table 1 below).

### (Manufacturing of secondary battery)

To N-methyl-2-pyrrolidone (NMP), which was a solvent, a positive electrode active material (Li(Ni_{0.9}Mn_{0.03}Co_{0.06}Al_{0.01})O₂), a conductive material (carbon black), and a binder (polyvinylidene fluoride) were added in a weight ratio of 97.6:0.8:1.6 to prepare a positive electrode slurry (solid content 60.0 wt%). The positive electrode slurry was applied and dried on a positive electrode current collector (Al thin film) having a thickness of 13.5 µm, and then roll-pressed to manufacture a positive electrode.

A negative electrode active material (weight ratio of graphite:SiO=94:6), a binder (SBR-CMC), and a conductive material (carbon black) were added in a weight ratio of 97.7:0.8:1.5 to water, which was a solvent, to prepare a negative electrode slurry (solid content: 60 wt%). The negative electrode slurry was applied and dried on a copper (Cu) thin film, which was a negative electrode current collector, having a thickness of 6 µm, and then roll-pressed to manufacture a negative electrode.

A porous separator polypropylene was interposed between the positive electrode and the negative electrode manufactured above to manufacture an electrode assembly , and then stored in a battery case, followed by injecting the prepared electrolyte for a lithium secondary battery into the battery case to manufacture a lithium secondary battery.

### Example 2

### (Preparation of non-aqueous electrolyte for lithium secondary battery)

In an organic solvent in which ethylene carbonate (EC), ethyl methyl carbonate (EMC), and a compound represented by Formula 1-A were mixed in a volume ratio of 30:30:40, LiPF₆ was dissolved to 1.0 M, and then vinylene carbonate (VC) was added thereto in an amount of 0.8 wt% to prepare a non-aqueous electrolyte for a lithium secondary battery (see Table 1 below).

### (Manufacturing of secondary battery)

A lithium secondary battery was manufactured in the same manner as in Example 1, except that the non-aqueous electrolyte for a lithium secondary battery used above was used.

### Example 3

### (Preparation of non-aqueous electrolyte for lithium secondary battery)

In an organic solvent in which ethylene carbonate (EC), ethyl methyl carbonate (EMC), and a compound represented by Formula 1-A were mixed in a volume ratio of 30:55:15, LiPF₆ was dissolved to 1.0 M, and then vinylene carbonate (VC) was added thereto in an amount of 0.8 wt% to prepare a non-aqueous electrolyte for a lithium secondary battery (see Table 1 below).

### (Manufacturing of secondary battery)

A lithium secondary battery was manufactured in the same manner as in Example 1, except that the non-aqueous electrolyte for a lithium secondary battery used above was used.

### Example 4

### (Preparation of non-aqueous electrolyte for lithium secondary battery)

In an organic solvent in which ethylene carbonate (EC), ethyl methyl carbonate (EMC), and a compound represented by Formula 1-A were mixed in a volume ratio of 20:40:40, LiPF₆ was dissolved to 1.0 M, and then vinylene carbonate (VC) was added thereto in an amount of 0.8 wt% to prepare a non-aqueous electrolyte for a lithium secondary battery (see Table 1 below).

### (Manufacturing of secondary battery)

A lithium secondary battery was manufactured in the same manner as in Example 1, except that the non-aqueous electrolyte for a lithium secondary battery used above was used.

### Example 5

### (Preparation of non-aqueous electrolyte for lithium secondary battery)

In an organic solvent in which ethylene carbonate (EC), ethyl methyl carbonate (EMC), and a compound represented by Formula 1-A were mixed in a volume ratio of 20:75:5, LiPF₆ was dissolved to 1.0 M, and then vinylene carbonate (VC) was added thereto in an amount of 0.8 wt% to prepare a non-aqueous electrolyte for a lithium secondary battery (see Table 1 below).

### (Manufacturing of secondary battery)

A lithium secondary battery was manufactured in the same manner as in Example 1, except that the non-aqueous electrolyte for a lithium secondary battery used above was used.

### Example 6

### (Preparation of non-aqueous electrolyte for lithium secondary battery)

In an organic solvent in which ethylene carbonate (EC), ethyl methyl carbonate (EMC), and a compound represented by Formula 1-A were mixed in a volume ratio of 30:60:10, LiPF₆ was dissolved to 1.0 M, and then vinylene carbonate (VC) was added thereto in an amount of 0.8 wt% to prepare a non-aqueous electrolyte for a lithium secondary battery (see Table 1 below).

### (Manufacturing of secondary battery)

A lithium secondary battery was manufactured in the same manner as in Example 1, except that the non-aqueous electrolyte for a lithium secondary battery used above was used.

### Comparative Example 1

### (Preparation of non-aqueous electrolyte for lithium secondary battery)

In an organic solvent in which ethylene carbonate (EC) and ethyl methyl carbonate (EMC) were mixed in a volume ratio of 30:70, LiPF₆ was dissolved to 1.0 M, and then vinylene carbonate (VC) was added thereto in an amount of 0.8 wt% to prepare a non-aqueous electrolyte for a lithium secondary battery (see Table 1 below).

### (Manufacturing of secondary battery)

A lithium secondary battery was manufactured in the same manner as in Example 1, except that the non-aqueous electrolyte for a lithium secondary battery used above was used.

### Comparative Example 2

### (Preparation of non-aqueous electrolyte for lithium secondary battery)

In an organic solvent in which ethylene carbonate (EC), ethyl methyl carbonate (EMC), and a compound represented by Formula 1-A were mixed in a volume ratio of 10:50:40, LiPF₆ was dissolved to 1.0 M, and then vinylene carbonate (VC) was added thereto in an amount of 0.8 wt% to prepare a non-aqueous electrolyte for a lithium secondary battery (see Table 1 below).

### (Manufacturing of secondary battery)

A lithium secondary battery was manufactured in the same manner as in Example 1, except that the non-aqueous electrolyte for a lithium secondary battery used above was used.

### Comparative Example 3

### (Preparation of non-aqueous electrolyte for lithium secondary battery)

In an organic solvent in which ethylene carbonate (EC), ethyl methyl carbonate (EMC), and a compound represented by Formula 1-A were mixed in a volume ratio of 30:65:5, LiPF₆ was dissolved to 1.0 M, and then vinylene carbonate (VC) was added thereto in an amount of 0.8 wt% to prepare a non-aqueous electrolyte for a lithium secondary battery (see Table 1 below).

### (Manufacturing of secondary battery)

A lithium secondary battery was manufactured in the same manner as in Example 1, except that the non-aqueous electrolyte for a lithium secondary battery used above was used.

### Comparative Example 4

### (Preparation of non-aqueous electrolyte for lithium secondary battery)

In an organic solvent in which ethylene carbonate (EC), ethyl methyl carbonate (EMC), and a compound represented by Formula R-1 were mixed in a volume ratio of 30:50:20, LiPF₆ was dissolved to 1.0 M, and then vinylene carbonate (VC) was added thereto in an amount of 0.8 wt% to prepare a non-aqueous electrolyte for a lithium secondary battery (see Table 1 below).

[Formula R-1] CH₃-SO₂-N(CH₃)₂

### (Manufacturing of secondary battery)

A lithium secondary battery was manufactured in the same manner as in Example 1, except that the non-aqueous electrolyte for a lithium secondary battery used above was used.

### Comparative Example 5

### (Preparation of non-aqueous electrolyte for lithium secondary battery)

In an organic solvent in which ethylene carbonate (EC), ethyl methyl carbonate (EMC), and a compound represented by Formula R-2 were mixed in a volume ratio of 30:50:20, LiPF₆ was dissolved to 1.0 M, and then vinylene carbonate (VC) was added thereto in an amount of 0.8 wt% to prepare a non-aqueous electrolyte for a lithium secondary battery (see Table 1 below).

[Formula R-2] CF₃-SO₂-N(CH₃)₂

### (Manufacturing of secondary battery)

A lithium secondary battery was manufactured in the same manner as in Example 1, except that the non-aqueous electrolyte for a lithium secondary battery used above was used.

### Comparative Example 6

### (Preparation of non-aqueous electrolyte for lithium secondary battery)

In an organic solvent in which fluoroethylene carbonate (FEC), ethyl methyl carbonate (EMC), and a compound represented by Formula 1-A were mixed in a volume ratio of 30:50:20, LiPF₆ was dissolved to 1.0 M, and then vinylene carbonate (VC) was added thereto in an amount of 0.8 wt% to prepare a non-aqueous electrolyte for a lithium secondary battery (see Table 1 below).

### (Manufacturing of secondary battery)

A lithium secondary battery was manufactured in the same manner as in Example 1, except that the non-aqueous electrolyte for a lithium secondary battery used above was used.

**[Table 1]**

| | Volume percentage (vol%) of each component of organic solvent | | | | | |
|---|---|---|---|---|---|---|
| | EC | EMC | Formula 1-A | Formula R-1 | Formula R-2 | FEC |
| Example 1 | 30 | 50 | 20 | - | - | - |
| Example 2 | 30 | 30 | 40 | - | - | - |
| Example 3 | 30 | 55 | 15 | - | - | - |
| Example 4 | 20 | 40 | 40 | - | - | - |
| Example 5 | 20 | 75 | 5 | - | - | - |
| Example 6 | 30 | 60 | 10 | - | - | - |
| Comparative Example 1 | 30 | 70 | - | - | - | - |
| Comparative Example 2 | 10 | 50 | 40 | - | - | - |
| Comparative Example 3 | 30 | 65 | 5 | - | - | - |
| Comparative Example 4 | 30 | 50 | - | 20 | - | - |
| Comparative Example 5 | 30 | 50 | - | - | 20 | - |
| Comparative Example 6 | - | 50 | 20 | - | - | 30 |

### Experimental Example 1. Evaluation of high-temperature storage properties

The lithium secondary batteries manufactured in Examples and Comparative Examples were subjected to an activation (formation) process under the condition of charging at a 0.2 C rate for 3 hours, and then charged (0.05 C cut-off) to 4.2 V at a 0.33 C at 25 °C under the constant current/constant voltage condition to fully charge the batteries to SOC 100%, and the batteries were stored at a high temperature (60 °C) for 16 weeks.

At the time of initial charge and discharge, the capacity at room temperature was confirmed, and then the batteries were charged to SOC 50 based on the discharge capacity, and discharged with a current of 2.5 C for 10 seconds to measure the resistance by using a voltage drop difference at this time, which was set to initial resistance, and after 16 weeks of storage at 60 °C, the resistance was measured in the same manner, which was set to final resistance, to calculate a resistance increase rate using the following equation. The results are shown in Table 2 below. 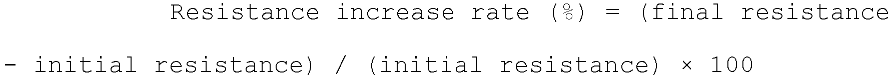
Resistance increase rate (%) = (final resistance - initial resistance) / (initial resistance) × 100

In addition, relative values (%) of the initial resistance of the lithium secondary batteries of Examples and Comparative Examples with respect to the initial resistance of the lithium secondary battery of Comparative Example 1 are shown in Table 2 below.

### Experimental Example 2. Evaluation of high-temperature gas generation

The lithium secondary batteries manufactured in Examples and Comparative Examples were subjected to an activation (formation) process under the condition of charging at a 0.2 C rate for 3 hours, and then charged (0.05 C cut-off) to 4.2 V at a 0.33 C at 25 °C under the constant current/constant voltage condition to fully charge the batteries to SOC 100%, and the batteries were stored at a high temperature (60 °C) for 16 weeks. Thereafter, the gas generation amount was analyzed, and relative values with respect to the gas generation amount of the lithium secondary battery of Comparative Example 1 are shown in Table 2 below.

**[Table 2]**

| | Relative value of initial resistance (%, compared to Comparative Example 1) | Resistance increase rate (%) | Relative value of gas generation (%, compared to Comparative Example 1) |
|---|---|---|---|
| Example 1 | 105.5 | 11.52 | 47 |
| Example 2 | 121.3 | 1. 81 | 30 |
| Example 3 | 102.3 | 14.55 | 49 |
| Example 4 | 124.6 | 6.97 | 41 |
| Example 5 | 101.8 | 16.24 | 65 |
| Example 6 | 103.4 | 15.23 | 53 |
| Comparative Example 1 | 100 | 31.79 | 100 |
| Comparative Example 2 | 127.1 | 33.48 | 87 |
| Comparative Example 3 | 99.6 | 27.94 | 91 |
| Comparative Example 4 | 118.2 | 404.8 | 152 |
| Comparative Example 5 | 110.6 | 16.04 | 79 |
| Comparative Example 6 | 127.6 | 38.64 | 108 |

Referring to Table 2 above, it can be confirmed that the lithium secondary batteries of Examples containing a compound of Formula 1 and ethylene carbonate in specific volume ratios as an organic solvent in the electrolyte had resistance and a resistance increase rate which were reduced at high temperatures, and an amount of gas generation which was significantly reduced.

## Claims

1. A non-aqueous electrolyte comprising:
a lithium salt, wherein the lithium salt is included at a molar concentration of 0.5 M to 5.0 M in the non-aqueous electrolyte; and
an organic solvent, wherein the organic solvent comprises ethylene carbonate and a compound represented by Formula 1 below, wherein the organic solvent comprises the ethylene carbonate in equal to or greater than 10 vol% to equal to or less than 50 vol%, and the compound represented by Formula 1 in equal to or greater than 5 vol% to equal to or less than 50 vol%: 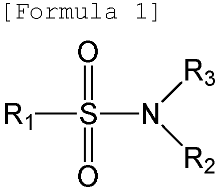
wherein in Formula 1 above, R₁ is a fluorine atom, and R₂ and R₃ are each independently hydrogen, an alkyl group having 1 to 10 carbon atoms, or an aryl group having 6 to 20 carbon atoms, and
wherein the compound represented by Formula 1 above comprises a compound represented by Formula 1-A below: 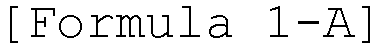 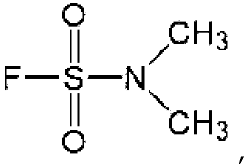
**characterized in that** a volume ratio of the compound represented by Formula 1 to the ethylene carbonate is 0.20 to 3.0.

2. The non-aqueous electrolyte of claim 1, wherein the volume ratio of a compound represented by Formula 1 to the ethylene carbonate is equal to or greater than 0.25 to equal to or less than 2.4.

3. The non-aqueous electrolyte of claim 1, wherein the organic solvent further comprises a linear carbonate-based organic solvent.

4. The non-aqueous electrolyte of claim 3, wherein the linear carbonate-based organic solvent comprises at least one selected from the group consisting of dimethyl carbonate, diethyl carbonate, dipropyl carbonate, ethyl methyl carbonate, methylpropyl carbonate, and ethylpropyl carbonate.

5. The non-aqueous electrolyte of claim 3, wherein the organic solvent comprises the linear carbonate-based organic solvent in equal to or greater than 20 vol% to equal to or less than 85 vol%.

6. The non-aqueous electrolyte of claim 3, wherein the ratio of the volume of the compound represented by Formula 1 above to the volume of the linear carbonate-based organic solvent is equal to or greater than 0.05 to equal to or less than 2.

7. The non-aqueous electrolyte of claim 3, wherein the ratio of the total volume of the ethylene carbonate and the compound represented by Formula 1 above to the volume of the linear carbonate-based organic solvent is equal to or greater than 0.3 to equal to or less than 2.5.

8. The non-aqueous electrolyte of claim 1, wherein the lithium salt comprises LiPF₆.

9. A lithium secondary battery comprising:
a negative electrode;
a positive electrode opposing the negative electrode;
a separator interposed between the positive electrode and the negative electrode; and
the non-aqueous electrolyte according to claim 1.

10. The lithium secondary battery of claim 9, wherein the negative electrode comprises a negative electrode active material, wherein the negative electrode active material comprises at least one of a carbon-based active material and a silicon-based active material.

## Patentansprüche

1. Nichtwässriger Elektrolyt, umfassend:
ein Lithiumsalz, worin das Lithiumsalz in einer Molkonzentration von 0,5 M bis 5,0 M im nichtwässrigen Elektrolyten enthalten ist; und
ein organisches Lösungsmittel, worin das organische Lösungsmittel Ethylencarbonat und eine durch nachfolgende Formel 1 dargestellte Verbindung umfasst, worin das organische Lösungsmittel das Ethylencarbonat in einer Menge von mindestens 10 Vol.-% bis höchstens 50 Vol.-% und die durch Formel 1 dargestellte Verbindung in einer Menge von mindestens 5 Vol.-% bis höchstens 50 Vol.-% umfasst: 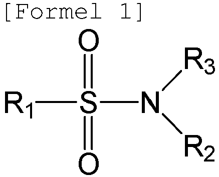
worin, in obiger Formel 1, R₁ ein Fluoratom ist und R₂ und R₃ unabhängig voneinander Wasserstoff, eine Alkylgruppe mit 1 bis 10 Kohlenstoffen oder eine Arylgruppe mit 6 bis 20 Kohlenstoffatomen ist, und
worin die durch obige Formel 1 dargestellte Verbindung eine durch nachfolgende Formel 1-A dargestellte Verbindung umfasst: 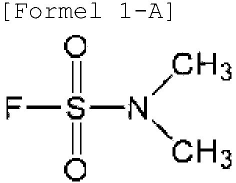
**dadurch gekennzeichnet, dass** ein Volumenverhältnis der durch Formel 1 dargestellten Verbindung zum Ethylencarbonat 0,20 bis 3,0 beträgt.

2. Nichtwässriger Elektrolyt gemäß Anspruch 1, worin das Volumenverhältnis einer durch Formel 1 dargestellten Verbindung zum Ethylencarbonat mindestens 0,25 und höchstens 2,4 beträgt.

3. Nichtwässriger Elektrolyt gemäß Anspruch 1, worin das organische Lösungsmittel ferner ein lineares, Carbonatbasiertes organisches Lösungsmittel umfasst.

4. Nichtwässriger Elektrolyt gemäß Anspruch 3, worin das lineare, Carbonat-basierte organische Lösungsmittel mindestens eines umfasst, ausgewählt aus der Gruppe, bestehend aus Dimethylcarbonat, Diethylcarbonat, Dipropylcarbonat, Ethylmethylcarbonat, Methylpropylcarbonat und Ethylpropylcarbonat.

5. Nichtwässriger Elektrolyt gemäß Anspruch 3, worin das lineare, Carbonat-basierte organische Lösungsmittel in mindestens 20 Vol.-% und höchstens 85 Vol.-% beträgt.

6. Nichtwässriger Elektrolyt gemäß Anspruch 3, worin das Verhältnis des Volumens der durch die obige Formel 1 dargestellten Verbindung zum Volumen des linearen, Carbonat-basierten organischen Lösungsmittels mindestens 0,05 und höchstens 2 beträgt.

7. Nichtwässriger Elektrolyt gemäß Anspruch 3, worin das Verhältnis des Gesamtvolumens von Ethylencarbonat und der durch obige Formel 1 dargestellten Verbindung zum Volumen des linearen, Carbonat-basierten organischen Lösungsmittels mindestens 0,3 und höchstens 2,5 beträgt.

8. Nichtwässriger Elektrolyt gemäß Anspruch 1, worin das Lithiumsalz LiPF₆ umfasst.

9. Lithiumsekundärbatterie, umfassend:
eine negative Elektrode;
eine der negativen Elektrode gegenüberliegende positive Elektrode;
einen zwischen der positiven und der negativen Elektrode geschalteten Separator;
und den nichtwässrigen Elektrolyten nach Anspruch 1.

10. Lithiumsekundärbatterie gemäß Anspruch 9, worin die negative Elektrode ein Aktivmaterial für eine negative Elektrode umfasst, worin das Aktivmaterial für eine negative Elektrode mindestens eines aus einem Kohlenstoff-basierten Aktivmaterial und einem Silicium-basierten Aktivmaterial umfasst.

## Revendications

1. Électrolyte non aqueux comprenant :
un sel de lithium, dans lequel le sel de lithium est inclus à une concentration molaire de 0,5 M à 5,0 M dans l'électrolyte non aqueux ; et
un solvant organique, dans lequel le solvant organique comprend du carbonate d'éthylène et un composé représenté par la formule 1 ci-dessous, dans lequel le solvant organique comprend le carbonate d'éthylène dans une quantité supérieure ou égale à 10 % en volume jusqu'à inférieure ou égale à 50 % en volume, et le composé représenté par la formule 1 dans une quantité supérieure ou égale à 5 % en volume jusqu'à inférieure ou égale à 50 % en volume : 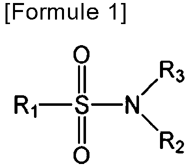
dans lequel, dans la formule 1 ci-dessus, R₁ est un atome de fluor et R₂ et R₃ sont chacun indépendamment de l'hydrogène, un groupe alkyle présentant 1 à 10 atomes de carbone ou un groupe aryle présentant 6 à 20 atomes de carbone, et
dans lequel le composé représenté par la formule 1 ci-dessus comprend un composé représenté par la formule 1-A ci-dessous : 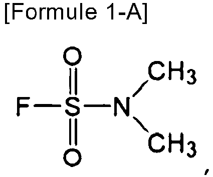
**caractérisé en ce qu'**un rapport volumique du composé représenté par la formule 1 sur le carbonate d'éthylène est compris de 0,20 à 3,0.

2. Électrolyte non aqueux selon la revendication 1, dans lequel le rapport volumique d'un composé représenté par la formule 1 sur le carbonate d'éthylène est supérieur ou égal à 0,25 jusqu'à inférieur ou égal à 2,4.

3. Électrolyte non aqueux selon la revendication 1, dans lequel le solvant organique comprend en outre un solvant organique à base de carbonate linéaire.

4. Électrolyte non aqueux selon la revendication 3, dans lequel le solvant organique à base de carbonate linéaire comprend au moins un carbonate choisi dans le groupe constitué de carbonate de diméthyle, carbonate de diéthyle, carbonate de dipropyle, carbonate d'éthyle méthyle, carbonate de méthylpropyle et carbonate d'éthylpropyle.

5. Électrolyte non aqueux selon la revendication 3, dans lequel le solvant organique comprend le solvant organique à base de carbonate linéaire dans une quantité supérieure ou égale à 20 % en volume jusqu'à inférieure ou égale à 85 % en volume.

6. Électrolyte non aqueux selon la revendication 3, dans lequel le rapport du volume du composé représenté par la formule 1 ci-dessus sur le volume du solvant organique à base de carbonate linéaire est supérieur ou égal à 0,05 jusqu'à inférieur ou égal à 2.

7. Électrolyte non aqueux selon la revendication 3, dans lequel le rapport du volume total du carbonate d'éthylène et du composé représenté par la formule 1 ci-dessus sur le volume du solvant organique à base de carbonate linéaire est supérieur ou égal à 0,3 jusqu'à inférieur ou égal à 2,5.

8. Électrolyte non aqueux selon la revendication 1, dans lequel le sel de lithium comprend LiPF₆.

9. Batterie secondaire au lithium comprenant :
une électrode négative,
une électrode positive opposée à l'électrode négative,
un séparateur interposé entre l'électrode positive et l'électrode négative ; et
l'électrolyte non aqueux selon la revendication 1.

10. Batterie secondaire au lithium selon la revendication 9, dans laquelle l'électrode négative comprend un matériau actif d'électrode négative, le matériau actif d'électrode négative comprenant au moins un matériau actif choisi parmi un matériau actif à base de carbone et un matériau actif à base de silicium.
